# EUROPÄISCHE PATENTSCHRIFT

(11) **EP 2 030 651 B1**
(45) Veröffentlichungstag und Bekanntmachung des Hinweises auf die Patenterteilung: **29.02.2012**
(21) Anmeldenummer: 08405194.5
(22) Anmeldetag: 11.08.2008
(51) Int. Cl.: A62C 2/18, F16K 3/02, G21C 9/04

(54) **Schutzvorrichtung für Lüftungskanäle**
Protection device for ventilation channels
Dispositif de protection pour canaux d'aération

(30) Priorität: 03.09.2007 CH 13742007
(43) Veröffentlichungstag der Anmeldung: 04.03.2009
(60) Teilanmeldung: 11170923.4
(73) Patentinhaber: Gasser, Erwin, 3123 Belp (CH)
(72) Erfinder: Gasser, Erwin, 3123 Belp (CH)
(74) Vertreter: Störzbach, Michael Andreas

(56) Entgegenhaltungen:
- DE-A1- 2 726 307
- DE-U1- 29 520 089
- US-A- 5 642 767

## Beschreibung

Die Erfindung betrifft eine Schutzvorrichtung gemäss dem Oberbegriff von Patentanspruch 1 sowie eine Schutzwand mit mindestens einer derartigen Schutzvorrichtung.

Rechenzentren, Schaltzentralen und andere Stellplätze für elektronische Komponenten benötigen lüftungstechnische Anlagen, die konditionierte Zu- und Rückluft zur Kühlung der darin befindlichen Komponenten zur Verfügung stellen. Da derartige Umluftkühlgeräte ein hohes Risiko an Brand- und Rauchgaslasten für die hochsensiblen Komponenten darstellen ist deren Abschottung vom eigentlichen Stellplatz der Komponenten in einem autarken Brandabschnitt üblich. Um die Übertragung von Feuer und Rauch in andere Brandabschnitte zu verhindern, werden Schutzvorrichtungen eingesetzt.

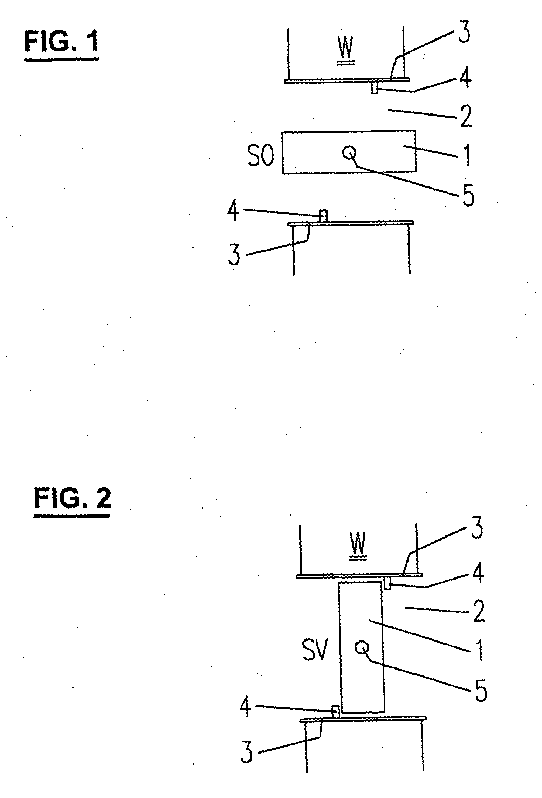

Derartige Schutzvorrichtungen sind herkömmlicherweise durch mit Federkraft betriebene Brandschutzklappen ausgestattet, die im Normalbetrieb der Lüftungsanlage in Längsrichtung des Strömungsweges der Zu- bzw. Rückluft stehen und die um eine Querachse zum Strömungsweg rotierbar sind, sodass der luftführende Querschnitt im Brandfall verschliessbar ist. Die Funktionsweise einer solchen Brandschutzklappe im Normalbetrieb und im Brandfall ist in der Fig. 1 bzw. Fig. 2 schematisiert.

Jedoch ist eine hochwertige Brandabschottung, wie sie beispielsweise einer gängigen Sicherheitsnorm gemäss EN1047-2 entspricht, mit solchen Schutzvorrichtungen nicht realisierbar. Denn einerseits müssen hierzu die Brandschutzklappen eine gewisse Mindestdicke aufweisen. Die Klappendicke wirkt jedoch limitierend auf den abgedeckten Lüftungsquerschnitt im Brandfall, da die Klappenlänge so gewählt sein muss, dass beim Rotieren der Brandschutzklappe ein Anecken an den Lüftungskanal vermieden ist. Eine Luftdichtigkeit ist damit nicht gewährleistet und durch die verbleibenden Leckströme in der Verschlussstellung der Brandschutzklappe ist der Feuerwiderstandswert stark reduziert. Andererseits generiert auch der nicht abgedeckte wärmeleitende Metallrahmen des Lüftungskanals einen unerwünscht guten Wärmeübergang zwischen den isolierten Brandabschnitten.

Aus der US 5,642,767 A ist eine Brandschutzvorrichtung für zwei Lüftungskanäle bekannt, die jeweils durch einen nach oben bzw. einen nach unten verschiebbaren Schutzschieber im Brandfall verschliessbar sind. Die Schutzschieber sind jeweils durch mehrere jalousieartig aneinandergereihte verschiebbare Einzelbrettchen gebildet. An den nach oben bewegliche Schutzschieber ist durch eine Seilzuganordnung und über Umlenkrollen ein Gegengewicht angelenkt, das durch einen Motor mit einer Bremse in einer oberen Fixposition gehalten wird. Im Brandfall wird die Bremse deaktiviert, wodurch eine nach oben gerichtete Bewegung der Trennwand eingeleitet wird. Durch den Motor ist die Trennwand wieder in die ursprüngliche Fixposition rückführbar.

Um ein sicheres Verschliessen des Schutzschiebers sicherzustellen, muss durch dass Gegengewicht eine Kraft auf den Schutzschieber übertragen werden, die signifikant über die an dem Schutzschieber wirkende Gewichtskraft hinausgeht. Folglich ist die zum Halten des Gegengewichts vorzusehene Motor-/Bremsanordnung sowohl kostentechnisch als auch betriebstechnisch von Nachteil, da auch im Nichtbrandfall ein kontinuierlicher Betrieb derselben nötig ist, so dass mit Verschleiss und Ausfällen zu rechnen ist. Ferner nachteilig ist der komplizierte Aufbau der Brandschutzvorrichtung, da für die nach oben bewegbaren Schutzschieber zusätzliche Gegengewichte im Lüftungskanalrahmen unterzubringen sind. Zudem sind die aus Einzelbrettchen gebildeten Schutzschieber nur bedingt zur hochgradigen Brandabschottung geeignet.

Hiervon ausgehend liegt der Erfindung die Aufgabe zugrunde, eine Schutzvorrichtung der eingangs genannten Art zu schaffen, durch welche unter Vermeidung zumindest einer der vorgenannten Nachteile eine ausgezeichnete Brandabschottung zwischen den Brandabschnitten gewährleistet ist.

Die genannte Aufgabe wird durch eine Schutzvorrichtung gemäss Patentanspruch 1 gelöst.

Erfindungsgemäss wird also ein vertikal verschiebbarer Schutzschieber vorgeschlagen, durch welchen im Brandfall eine vollständige Abdeckung des luftführenden Kanalquerschnitts erzielt werden kann, sodass eine Übertragung von Feuer und Rauch in einen angrenzenden Brandabschnitt wirkungsvoll vermieden ist.

Bevorzugt weist ein derartiger Schutzschieber eine hochgradig brandisolierende Materialzusammensetzung auf, die gegebenfalls von einem rostfreien Stahlrahmen umfasst ist. Dies wiederum bedingt eine hohe Gewichtslast, die es bei der vertikalen Bewegung des Schutzschiebers in dessen Verschlussstellung zu überwinden gilt. Hierzu sind herkömmliche Antriebseinrichtungen, wie sie in Schutzvorrichtungen zum Einsatz kommen, nicht in der Lage.

Zur Lösung dieses technischen Problems wird erfindungsgemäss ein Kompensationselement vorgeschlagen. Das Gewicht des Kompensationselements entspricht dabei mindestens der Hälfte des Gewichts des Schutzschiebers oder kann über dessen Gewicht hinausgehen. Dadurch wird eine Gewichtskompensation des Schutzschiebers erreicht, so dass nur ein vergleichsweise geringer Kraftaufwand zu dessen Überführung in die Verschlussstellung notwendig ist.

In bevorzugter Ausführung ist das Kompensationselement durch einen weiteren Schutzschieber gebildet.

Ein anderes bevorzugtes Einsatzgebiet der erfindungsgemässen Schutzvorrichtung besteht im Brandschutz von Tunneln bzw. beim Tunnelbau oder in der Brand- und/oder Strahlungsabschottung in Kernkraftwerken, wobei ein Grossteil des Schutzschiebers jeweils aus strahlungsabsorbierendem Material besteht.

Weitere bevorzugte Ausführungsformen der Erfindung sind jeweils durch die übrigen abhängigen Patentansprüche definiert.

Nachfolgend ist die Erfindung anhand einer bevorzugten Ausführungsform unter Bezugnahme auf die Zeichnungen näher erläutert, anhand welcher sich weitere Eigenschaften und Vorteile der Erfindung ergeben. Die Figuren, die Beschreibung und die Ansprüche enthalten zahlreiche Merkmale in Kombination, die der Fachmann auch einzeln betrachten und zu sinnvollen weiteren Kombinationen zusammenfassen wird. Dabei zeigen:
- Fig. 1:: eine schematische Seitenansicht einer herkömmlichen Brandschutzklappe in einer Offenstellung;
- Fig. 2:: die in Fig. 1 gezeigte herkömmliche Brandschutzklappe in einer Verschlussstellung;
- Fig. 3:: eine Vorderansicht einer erfindungsgemässen Schutzvorrichtung mit Schutzschiebern in einer Offenstellung;
- Fig. 4:: die in Fig. 3 gezeigte erfindungsgemässe Schutzvorrichtung in einer Seitenansicht;
- Fig. 5:: eine Vorderansicht der in Figg. 3 und 4 gezeigten erfindungsgemässen Schutzvorrichtung mit den Schutzschiebern in einer Verschlussstellung;
- Fig. 6:: die in Fig. 5 gezeigte erfindungsgemässe Schutzvorrichtung in einer Seitenansicht; und
- Fig. 7:: die in Figg. 3 und 4 gezeigte erfindungsgemässe Schutzvorrichtung mit den Schutzschiebern in einer Offenstellung in einer perspektivischen Ansicht.

In den Figg. 1 und 2 ist die Funktionsweise einer herkömmlichen Brandschutzvorrichtung schematisch dargestellt. Diese weist eine Brandschutzklappe 1 auf, die im Innenraum eines Luftzuführ- oder Luftabführkanals 2 angeordnet ist, der als Durchgang in einer Wand W ausgebildet ist. Im Anschlussbereich des Kanals 2 an die Wand W ist ein Metallrahmen 3 vorgesehen, an dessen Ober- bzw. Unterseite jeweils ein Stopperglied 4 in den Kanal 2 hineinragt. Entlang der Mittellinie der Brandschutzklappe 1 erstreckt sich eine horizontale Schwenkachse 5, um welche die Brandschutzklappe 1 rotierbar gelagert ist.

In der in Fig. 1 gezeigten Position befindet sich die Brandschutzklappe 1 in einer Offenstellung SO, in welcher die grossflächigen Klappenseiten in Richtung der Wanddicke der Wand W verlaufen. Dies entspricht der Durchgangsrichtung der Luft im Normalbetrieb der Lüftungsanlage, sodass eine Luftzirkulation durch den Kanal 2 möglich ist. Im Brandfall wird die Brandschutzklappe 1 von der Offenstellung SO in eine Verschlussstellung SV überführt, wie sie in Fig. 2 dargestellt ist. Durch ein Stopperglied 4 wird die Brandschutzklappe 1 in der Verschlusstellung SV gehalten. In der Verschlussstellung SV erstrecken sich die grossflächigen Seiten der Brandschutzklappe 1 parallel zu den Seitenflächen der Wand W, sodass ein Grossteil des Kanaldurchmessers 2 durch die Brandschutzklappe 1 abgedeckt ist, wodurch ein möglicher Luftaustausch durch den Kanal 2 stark reduziert ist.

Jedoch ist in der Verschlussstellung SV keine vollständige Luftdichtigkeit durch die Brandschutzklappe 1 gewährleistet. Denn eine Wandgängigkeit der Brandschutzklappe 1 in der Verschlussstellung SV ist technisch nicht realisierbar, da ein Anecken der kleinflächigen Seiten der Brandschutzklappe 1 an den Metallrahmen 3 im Laufe des Rotationsvorgangs vermieden werden muss, um in die Verschlussstellung SV zu gelangen. Einen weiteren Schwachpunkt einer solchen herkömmlichen Brandschutzvorrichtung stellt der wärmeleitende Metallrahmen 3 dar, durch welchen im Brandfall eine unerwünscht hohe Wärmeübertragung zwischen Brandherd auf der einen Wandseite und dem Schutzbereich auf der anderen Wandseite hervorgerufen wird. Nachteilig ist auch der verhältnismässig hohe Kraftaufwand, der zum Schliessen bzw. Öffnen der Brandschutzklappe 1 bei laufender Ventilation benötigt wird.

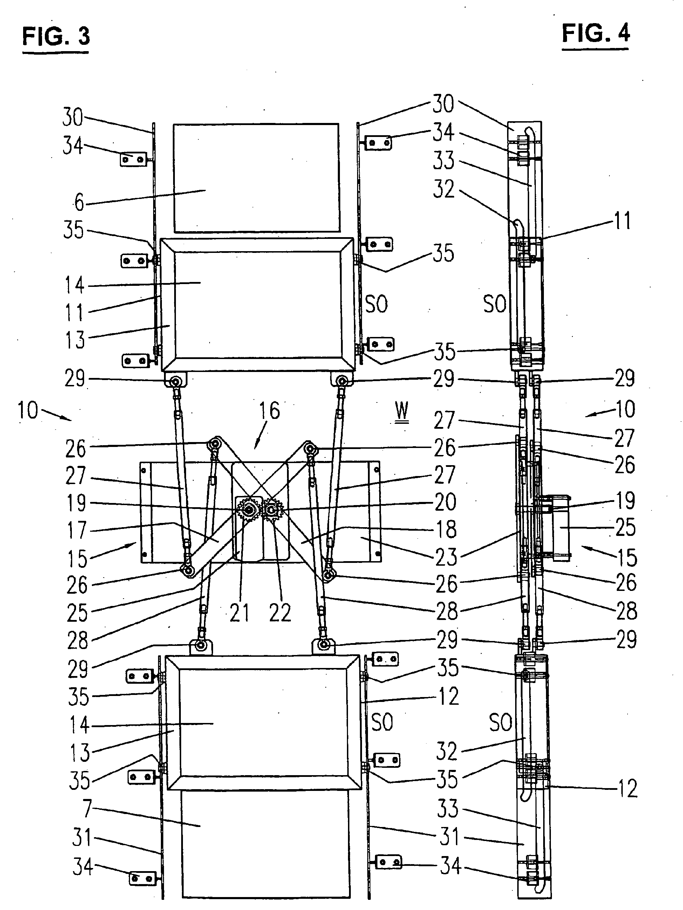

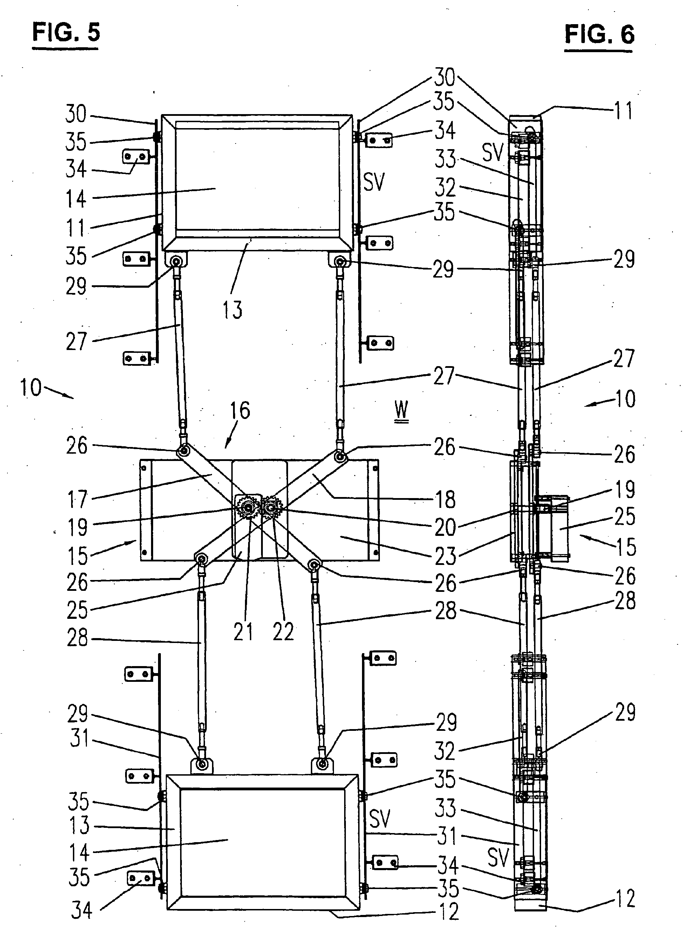

In Fig. 3 bzw. Fig. 5 ist eine erfindungsgemässe Schutzvorrichtung 10 in einer entsprechenden Offenstellung SO bzw. Verschlussstellung SV in einer Vorderansicht dargestellt. Dabei sind in der Wandfläche W eine rechteckförmige obere Kanalöffnung 6 zur Zuführung der im Aussenraum erwärmten Warmluft und eine identisch ausgebildete untere Kanalöffnung 7 zur Abführung der im Innenraum erzeugten Kaltluft vorhanden.

Die Schutzvorrichtung 10 umfasst einen oberen und unteren Schutzschieber 11 und 12 mit ebenfalls identisch ausgebildeter im Wesentlichen rechteckförmiger Oberfläche. Dabei weist jeder der Schutzschieber 11, 12 in seinem Randbereich einen Rahmen 13 auf, der aus rostfreiem Stahl besteht. In den Rahmen 13 ist jeweils eine Innenschicht 14 aus hochgradig isolierendem Brandschutzmaterial eingefasst. Als Brandschutzmaterial kann beispielsweise eine zementgebundene Silikat-Brandschutzplatte eingesetzt werden, trotz ihres hohen spezifischen Gewichtes in einem Bereich von ca. 400 bis 2000 kg/m³. Ein derart konstruierter Schutzschieber weist beispielsweise ein Gewicht von mindestens 10 kg auf, oder kann um ein Vielfaches darüber hinausgehen.

Die Oberfläche der Innenschicht 14 der Schutzschieber 11, 12 ist im Wesentlichen deckungsgleich mit den Kanalöffnungen 6, 7 oder ragt geringfügig über deren Seitenkanten hinaus, damit in der Verschlussstellung SV der Schutzschieber 11, 12 ein vollständiges Abdecken der Kanalöffnungen 6, 7 gewährleistet ist, wie in Fig. 5 ersichtlich ist.

In der Offenstellung SO, die in Fig. 3 dargestellt ist, befindet sich der obere Schutzschieber 11 unterhalb der oberen Kanalöffnung 6 und der untere Schutzschieber 12 oberhalb der unteren Kanalöffnung 7.

Zum Überführen der Schutzschieber 11, 12 von der Offenstellung SO in die Verschlussstellung SV im Brandfall ist im vertikalen Zwischenbereich zwischen den Schutzschiebern 11, 12 ein Schiebemechanismus 15 angeordnet. In dem Zentralbereich des Schiebemechanismus 15 ist eine Hebelanordnung 16 angeordnet, die zwei Hebel 17, 18 mit identischer geradliniger Form umfasst. Die Hebel 17, 18 überkreuzen sich in einem an ihren jeweiligen Schwenkachsen 19, 20 angrenzenden Bereich.

Die Schwenkachsen 19, 20 befinden sich im jeweiligen Mittelpunkt bezüglich der longitudinalen Erstreckungsrichtung der Hebel 17, 18. An den Schwenkachsen 19, 20 ist jeweils ein Zahnrad 21, 22 vorhanden, welches zwischen den Hebeln 17, 18 und einer Befestigungsplatte 23 angeordnet ist, an welcher die Schwenkachsen 19, 20 befestigt sind. Die Befestigungsplatte 23 ist starr mit der Wand W verbunden. Die Zahnräder 21, 22 sind nebeneinander angeordnet und greifen ineinander, sodass sie beim Verschwenken der Hebel 17, 18 zusammenwirken.

Über dem sich überkreuzenden Bereich der Hebel 17, 18 ist eine weitere Befestigungsplatte 24 montiert, auf welcher eine Aktivierungseinheit 25 befestigt ist. Die Aktivierungseinheit 25 greift an die linke Schwenkachse 19 an, sodass sie über die Zahnräder 21, 22 auch mit der rechten Schwenkachse 20 wirkverbunden ist. Im konkreten Fall ist die Aktivierungseinheit 25 durch einen Federrücklaufantrieb realisiert, dessen Motor zum Aufziehen der Feder und dessen Federrücklauf zum Übertragen eines Drehmoments von ca. 10 - 20 Nm ausgebildet ist. In der Offenstellung SO der Schutzschieber 11, 12 befindet sich die Feder im angespanntem Zustand.

An den Endseiten der Hebel 17, 18 sind Gelenke 26 vorhanden, an welche jeweils eine Verbindungsstange angelenkt ist. Die zwei Verbindungsstangen 27 dienen zur Kraftübertragung auf den oberen Schutzschieber 11 und erstrecken sich von jeweils einem aussenseitig an dem Schutzschieber angeordneten Gelenk 29 zu den in der Offenstellung SO unteren hebelendseitigen Gelenken 26. Die beiden Verbindungsstangen 28 weisen an ihrem unteren Ende jeweils eine Gelenkverbindung 29 mit dem unteren Schutzschieber 12 auf, während sie an ihrem oberen Ende jeweils an die Hebelenden 17, 18 angelenkt sind, die sich in der Offenstellung SO der Schutzschieber 11, 12 oben befinden.

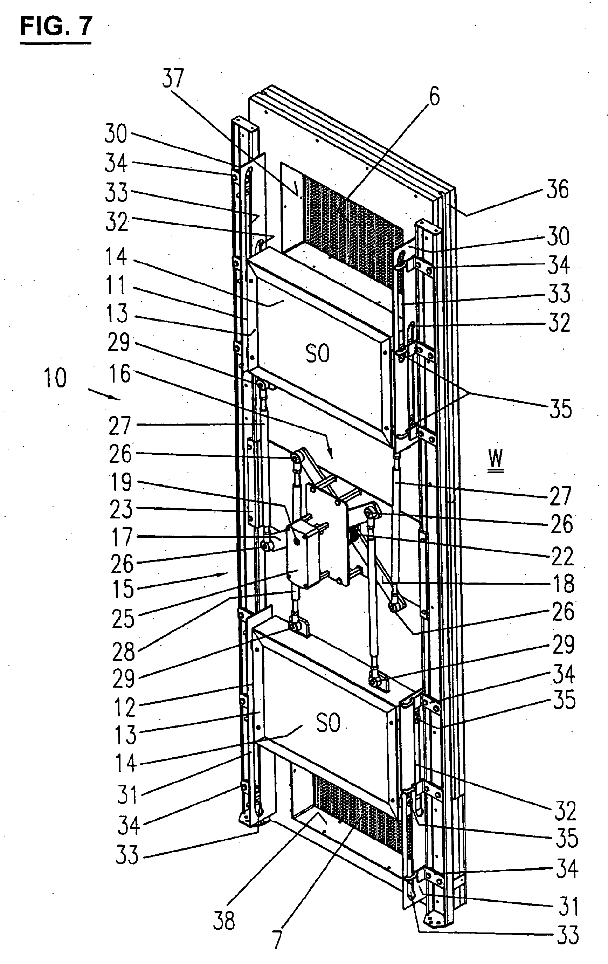

In den Seitenansichten in Fig. 4 und Fig. 6 und in der perspektivischen Darstellung in Fig. 7 ist die Lagerung der Schutzschieber 11, 12 entlang der Wandfläche W klarer ersichtlich. Entlang der vertikalen Seitenflächen des oberen Schutzschiebers 11 und des unteren Schutzschiebers 12 ist jeweils ein Führungschienenpaar 30, 31 angeordnet, dessen Gesamtlänge im Wesentlichen der doppelten vertikalen Schieberseitenlänge entspricht. Derart ist eine vertikale Verschiebbarkeit der Schutzschieber 11, 12 zwischen der Offenstellung SO und der Verschlussstellung SV gewährleistet.

In jeder Führungsschiene der Führungsschienenpaare 30, 31 sind zwei längliche, im Wesentlichen in vertikaler Richtung parallel zueinander verlaufende Durchbrüche vorhanden, die als Führungsschlitze 32, 33 fungieren. Die wandseitigen Führungsschlitze 32 erstrecken sich von der von der jeweiligen Kanalöffnung 6, 7 abgewandten Seite der Führungsschienenpaare 30, 31 bis in den Mittelbereich der Führungsschienen. Die vorderen Führungsschlitze 33 verlaufen von dem Mittelbereich der Führungsschienen 30, 31 bis zum entgegengesetzten Ende der Führungsschienen. Dabei wird lediglich der Mittelbereich der Führungsschienen von beiden Führungsschlitzen 32, 33 durchlaufen. Mittels jeweils dreier Befestigungsplättchen 34 sind die Führungsschienen mit der Wand W verschraubt.

Im oberen und unteren Endabschnitt der vertikalen Seitenflächen der Schutzschieber 11, 12 ist jeweils ein Führungsbolzen 35 bzw. 36 im oberen bzw. unteren Schutzschieber 11 bzw. 12 vorhanden, welcher in jeweils einen der Führungsschlitze 32, 33 eingreift. Der geradlinige Verlauf der Führungsschlitze 32, 33 ist in seinem oberen bzw. unteren Endabschnitt beim oberen bzw. unteren Führungsschienenpaar 30 bzw. 31 leicht abgeschrägt, um derart ein Heranführen der Führungsbolzen 35, 36 in Wandrichtung bis in die Verschlussstellung SV zu ermöglichen. Somit ist Reibungsfreiheit bei der Bewegung der Schutzschieber 11, 12 gewährleistet, da diese erst in der Verschlussstellung SV mit der Wand W in Kontakt treten.

Durch eine derart konstruierte Schutzvorrichtung 10 kann eine hervorragende Brandabschottung erreicht werden, welche über herkömmliche Sicherheitsnormen gemäss EN1047-2 bei weitem hinausgeht.

Die vorstehend beschriebene Schutzvorrichtung 10 kommt beispielsweise in Brandschutzräumen von Klimatisierungsanlagen für informationstechnische Einrichtungen zum Einsatz. Ein weiteres bevorzugtes Anwendungsgebiet besteht in der Brand- und/oder Strahlungsabschottung in Kernkraftwerken. In diesem Fall ist denkbar, dass ein wesentlicher Bestandteil der Schutzschieber 11, 12 durch ein strahlungsabsorbierendes Material gebildet ist, beispielsweise ein bleihaltiges Metallgemisch, durch welches eine im Katastrophenfall auftretende ionisierende Strahlung absorbiert wird. Aufgrund der zu erfüllenden hohen Sicherheitsnorm können dabei keine Kompromisse hinsichtlich des hohen Gewichts der Schutzschieber 11, 12 eingegangen werden, sodass eine hochgradige Abschottung gegen jegliche Art von kompromittierender Strahlung gewährleistet ist.

Dabei können eine Mehrzahl von Schutzvorrichtungen 10 entlang der Wandfläche W modulartig nebeneinander angeordnet sein. Mehrere Schutzvorrichtungen 10 können vorteilhaft beliebig nahe nebeneinandergereiht werden, da nur in vertikaler Richtung angeordnete Elemente vorhanden sind, die über die horizontale Breite der Kanalöffnungen 6, 7 nicht oder nur wenig hinausragen.

In einer bevorzugten Ausführungsform einer solchen Schutzwand ist bei einer modulartigen Nebeneinanderreihung von Schutzvorrichtungen 10 ein modulartiges Wandelement 36 zwischen jeweils einer Schutzvorrichtung 10 und der Wand W vorgesehen, wie in Fig. 7 in perspektivischer Ansicht dargestellt ist. Die Oberfläche des Wandelements 36 erstreckt sich im Wesentlichen über die gesamte Längen- und Breitenausdehnung der zugeordneten Schutzvorrichtung 10. Zum Anschluss an die Kanalöffnungen 6, 7 in der Wand W sind bezüglich ihrer Position und Grösse korrespondierende Durchbrüche 37, 38 in jeweils einem Wandelement 36 vorhanden. Bei der Wand W kann es sich beispielsweise um eine Betonwand handeln, während das Wandelement 36 vorzugsweise aus rostfreiem Stahl gebildet ist. Alternativ kann das Wandelement 36 auch ein beliebiges anderes Brandschutzmaterial aufweisen oder beim Einsatz in Kernkraftwerken auch strahlungsabsorbierendes Material umfassen.

Nachfolgend ist die Funktionsweise der beschriebenen Schutzvorrichtung 10 näher erläutert.

Im Normalbetrieb der Klimatisierungsanlage befinden sich die Schutzschieber 11, 12 in der Offenstellung SO. Durch die im oberen Raumbereich angeordneten Zuluftkanäle 6 und die im unteren Raumbereich angeordneten Abluftkanäle 7 wird eine optimale Luftzirkulation ermöglicht.

Im Brandfall der Klimatisierungsanlage sind die unterhalb bzw. oberhalb der Kanalöffnung 6 bzw. 7 angeordneten Schutzschieber 11 bzw. 12 in die Verschlussstellung SV überführbar. Der hierzu benötigte Kraftaufwand wird durch die Aktivierungseinheit 25 zur Verfügung gestellt, in welchem aufgrund eines thermoelektrischen Signals oder aufgrund eines Stromausfalls der Federrücklaufmotor abgeschaltet wird, sodass durch den aktivierten Federrücklauf ein Drehmoment auf die Schwenkachse 19 übertragen wird. Dadurch erfolgt eine Schwenkbewegung der Hebelanordnung 16, deren vertikale Bewegungskomponente an die daran angelenkten Schutzschieber 11, 12 übertragen wird.

Durch die vollständige Abdeckung der Kanalöffnungen 6, 7 durch die Schutzschieber 11, 12, sowie durch deren hochgradig brandisolierende Wirkung, ist in der Verschlussstellung SV ein wirkungsvoller Brandschutz gewährleistet, der gemeinhin übliche Brandschutzvorkehrungen gemäss der Norm EN1047-2 bei weitem übertrifft.

Durch die zwischen den Schutzschiebern 11, 12 angeordnete Hebelanordnung 16 wird das hohe Gewicht jedes der Schutzschieber 11, 12 durch den jeweils anderen Schutzschieber 11, 12 kompensiert. Denn die Gewichtskraft an jeweils einen der Schutzschieber 11, 12 erzeugt eine entgegengerichtete Kraft an dem jeweils anderen der Schutzschieber 11, 12. Derart fungiert jeder der Schutzschieber 11, 12 als Kompensationselement für den anderen Schutzschieber 11, 12. Dabei ist die Schutzschieberanordnung vollkommen ausbalanciert, d. h. die Schutzschieber 11, 12 befinden sich im Wesentlichen im Kräftegleichgewicht.

Somit ist zum Überführen der Schutzschieber in die Verschlussstellung SV und zur Rückführung in die Offenstellung SO nur ein geringer Kraftaufwand aufzubringen, wie er durch einen herkömmlichen Federrücklaufantrieb 25 bereitgestellt werden kann. Durch den geringen aufzubringenden Kraftaufwand ist auch eine hohe Zuverlässigkeit des Aktivierungsmechanismus gewährleistet, wodurch die Brandschutzsicherheit nochmals erhöht wird.

Aus der Beschreibung des bevorzugten Ausführungsbeispiels sind dem Fachmann zahlreiche Abwandlungen zugänglich, ohne den Schutzbereich der Erfindung zu verlassen, der durch die Patentansprüche definiert ist.

So ist beispielsweise zwischen den Schutzschiebern 11, 12 anstelle der Hebelanordnung 16 eine Seilzuganordnung denkbar, durch welche in vorangehend beschriebener Weise durch die Gewichtskraft eines der Schutzschieber 11, 12 eine entgegengesetzt gerichtete Kraft auf dem jeweils anderen der Schutzschieber 11, 12 vermittelt wird. Um die geforderte hohe Funktionssicherheit zu gewährleisten, können beispielsweise strapazierfähige Stahlseile verwendet werden. Dabei kann der Schiebemechanismus 15 eine Mehrzahl von Umlenkrollen umfassen, über welche die Stahlseile geführt sind und derart die Schutzschieber 11, 12 im Notfall durch Ziehen der Stahlseile in die Verschlusstellung SV überführt werden.

Weiterhin muss die Oberfläche der Schutzschieber nicht zwangsläufig einer Rechtecksform entsprechen. Es sind auch runde oder mehreckig ausgebildete Schutzschieber denkbar, die beispielsweise der Querschnittsform eines Lüftungsrohrs nachempfunden sind. Wesentlich ist lediglich eine vollständige wandseitige Abdeckung des Lüftungskanals.

Die erfindungsgemässe Schutzvorrichtung ist ferner bei verschiedenartig postionierten Kanalöffnungen einsetzbar. Neben einem in den oberen Wandbereich mündenden Zuluftkanal und einem in den unteren Wandbereich mündenden Abluftkanal sind beispielsweise auch Kanalöffnungen denkbar, die in der Decke oder im Boden in Wandnähe des Schutzraumes vorhanden sind. Diese sind in der beschriebenen Weise durch die vertikal entlang der Wand verschiebbaren Schutzschieber vollständig abdeckbar.

Zur Gewichtskompensation ist neben einem weiteren Schutzschieber ein beliebig geartetes Gegengewicht denkbar. Durch eine geeignete Hebelanordnung kann das Eigengewicht des Kompensationselements vergleichsmässig gering sein und dennoch zur Kompensation eines Grossteils des Schutzschiebergewichts herangezogen werden.

## Patentansprüche

1. Schutzvorrichtung (10) für Lüftungskanäle, bei welchen mindestens eine Kanalöffnung (6, 7) zur Luftzuführung und/oder -abführung vorgesehen ist, insbesondere zur Brandabschottung von Klimatisierungsräumen für informationstechnische Einrichtungen oder von Tunneln bzw. Tunnelkonstruktionen oder zur Brand- und/oder Strahlungsabschottung in Kernkraftwerken, mit mindestens einem Schutzschieber (11, 12), der in vertikaler Richtung verschiebbar gelagert ist, mit einem Schiebemechanismus (15), mittels welchem der Schutzschieber (11, 12) von einer Offenstellung (SO) in eine Verschlussstellung (SV) der Kanalöffnung (6, 7) überführbar ist, wobei die Kanalöffnung (6, 7) in der Verschlussstellung (SV) vollständig von dem Schutzschieber (11, 12) abgedeckt ist, und mit einem Kompensationselement (11, 12) zur Gewichtskompensation des Schutzschiebers (11, 12), wobei das Gewicht des Kompensationselements (11, 12) mindestens einem Grossteil des Gewichts des Schutzschiebers (11, 12) entspricht, **dadurch gekennzeichnet, dass** der Schiebemechanismus (15) eine Hebelanordnung (16) oder Seilzuganordnung umfasst, welche derart an den Schutzschieber (11, 12) und an das Kompensationselement (11, 12) angelenkt ist, dass durch die auf das Kompensationselement (11, 12) wirkende Gewichtskraft eine in Gegenrichtung wirkende Kraft auf den Schutzschieber (11, 12) verursacht ist, wobei das Kompensationselement (11, 12) und/oder die Hebelanordnung (16) bzw. Seilzuganordnung derart ausgebildet ist, dass jeweils zwischen der Gewichtskraft und der in Gegenrichtung wirkenden Kraft an dem Schutzschieber (11, 12) und an dem Kompensationselement (11, 12) im Wesentlichen ein Kräftegleichgewicht herrscht.

2. Schutzvorrichtung nach Anspruch 1, **dadurch gekennzeichnet, dass** das Kompensationselement durch einen weiteren Schutzschieber (11, 12) gebildet ist.

3. Schutzvorrichtung nach Anspruch 1 oder 2, **dadurch gekennzeichnet, dass** die Hebelanordnung (16) mindestens einen Hebel (17, 18) mit einer Schwenkachse (19, 20) aufweist, die zwischen dem Schutzschieber (11, 12) und dem Kompensationselement (11, 12) ungeordnet ist, wobei der Schutzschieber (11, 12) eine an jeweils einem Hebelende und das Kompensationselement (11, 12) eine an dem jeweils anderen Hebelende angelenkte Verbindung (27, 28) aufweist.

4. Schutzvorrichtung nach Aspruch 3, **dadurch gekennzeichnet, dass** die Hebelanordnung (16) zwei sich überkreuzende Hebel (17, 18) umfasst.

5. Schutzvorrichtung nach Anspruch 4, **dadurch gekennzeichnet, dass** an der jeweiligen Schwenkachse (19, 20) der Hebel (17, 18) ein Zahnrad (21, 22) vorhanden ist, wobei die Zahnräder (21, 22) gegenseitig ineinandergreifen und somit beim Verschwenken der Hebel (17, 18) zusammenwirken.

6. Schutzvorrichtung nach einem der Ansprüche 1 bis 5, **dadurch gekennzeichnet, dass** der Schiebemechanismus (15) eine auf die Hebelanordnung (16) wirkende Aktivierungseinheit (25) umfasst, die ein Verschwenken der Hebelanordnung (16) im Brandfall verursacht, wodurch der jeweilige Schutzschieber (11, 12) in die Verschlussstellung (SV) überführbar ist.

7. Schutzvorrichtung nach Anspruch 6, **dadurch gekennzeichnet, dass** die Aktivierungseinheit (25) an mindestens einer Schwenkachse (19, 20) der Hebel (17, 18) angreift.

8. Schutzvorrichtung nach Anspruch 6 oder 7, **dadurch gekennzeichnet, dass** die Aktivierungseinheit (25) durch einen Federrücklaufantrieb gebildet ist.

9. Schutzvorrichtung nach einem der Ansprüche 6 bis 8, **dadurch gekennzeichnet, dass** diese zum Überführen des Schutzschiebers (11, 12) von der Offenstellung (SO) in die Verschlussstellung (SV) und zum Rückführen des Schutzschiebers (11, 12) von der Verschlussstellung (SV) in die Offenstellung (SO) derart ausgebildet ist, dass hierzu jeweils nur eine geringe Krafteinwirkung durch die Aktivierungseinheit (25) notwendig ist, die höchstens 50 Nm, vorzugsweise höchstens 15 Nm, beträgt.

10. Schutzvorrichtung nach einem der Ansprüche 1 bis 9, **dadurch gekennzeichnet, dass** der Schiebemechanismus (15) im Wesentlichen aus rostfreiem Stahl gebildet ist.

11. Schutzvorrichtung nach einem der Ansprüche 1 bis 10, **gekennzeichnet durch** ein Wandelement (36) zur modularen Anordnung an der Wand W, wobei das Wandelement (36) zu den Kanalöffnungen (6, 7) korrespondierende Durchbrüche (37, 38) aufweist.

12. Schutzvorrichtung nach einem der Ansprüche 1 bis 11, **dadurch gekennzeichnet, dass** ein Grossteil des Schutzschiebers (11, 12) jeweils aus hochgradig brandisolierendem Material, vorzugsweise einer zementgebundenen Silikat-Brandschutzplatte, besteht.

13. Schutzvorrichtung nach einem der Ansprüche 1 bis 12, **dadurch gekennzeichnet, dass** ein Grossteil des Schutzschiebers (11, 12) jeweils aus strahlungsabsorbierendem Material, vorzugsweise einem bleihaltigen Metallgemisch, besteht.

14. Schutzwand, insbesondere zur Brandabschottung von Klimatisierungsräumen für informationstechnische Einrichtungen oder zur Brand- und/oder Strahlungsabschottung in Kernkraftwerken, **gekennzeichnet durch** mindestens eine Schutzvorrichtung (10) nach einem der Ansprüche 1 bis 13.

15. Schutzwand nach Anspruch 14, **gekennzeichnet durch** einen modularen Aufbau mit einer Mehrzahl von Schutzvorrichtungen (10) nach einem der Ansprüche 1 bis 13.

## Claims

1. Protection device (10) for ventilation ducts where at least one duct opening (6, 7) for the supply and/or evacuation of air is provided, more particularly for fire protection of air conditioned rooms for information technology installations or of tunnels or tunnel constructions or for fire and/or radiation protection in nuclear power plants, comprising at least one protection slide (11, 12) that is supported in a vertically displaceable manner, a sliding mechanism (15) by means of which the protection slide (11, 12) is movable from an open position (SO) to a closed position (SV) of the duct opening (6, 7), the duct opening (6, 7) being completely covered by the protection slide (11, 12) in the closed position (SV), and a compensating element (11, 12) for compensating the weight of the protection slide (11, 12), the weight of the compensating element (11, 12) corresponding to at least a substantial part of the weight of the protection slide (11, 12), **characterised in that** the sliding mechanism (15) comprises a lever arrangement (16) or a cable assembly that is articulated on the protection slide (11, 12) and on the compensating element (11, 12) in such a manner that the weight acting upon the compensating element (11, 12) produces a force acting upon the protection slide (11, 12) in the opposite direction, the compensating element (11, 12) and/or the lever arrangement (16) or cable assembly being so designed that between the weight and the force acting in the opposite direction upon the protection slide (11, 12) and upon the compensating element (11, 12), respectively, an equilibrium of forces is substantially obtained.

2. Protection device according to claim 1, **characterised in that** the compensating element is constituted by another protection slide (11, 12).

3. Protection device according to claim 1 or 2, **characterised in that** the lever arrangement (16) comprises at least one lever (17, 18) having a pivot axis (19, 20) that is located between the protection slide (11, 12) and the compensating element (11, 12), the protection slide (11, 12) having a connecting member (27, 28) that is articulated on one respective lever end and the compensating element (11, 12) a connecting member (27, 28) that is articulated on the other respective lever end.

4. Protection device according to claim 3, **characterised in that** the lever arrangement (16) comprises two levers (17, 18) crossing one another.

5. Protection device according to claim 4, **characterised in that** the respective pivot axes (19, 20) of the levers (17, 18) are provided with gearwheels (21, 22), the gearwheels (21, 22) meshing with one another and thus cooperating during the pivoting movement of the levers (17, 18).

6. Protection device according to any one of claims 1 to 5, **characterised in that** the sliding mechanism (15) comprises an activating unit (25) that acts upon the lever arrangement (16) and causes a pivoting movement of the lever arrangement (16) in the event of fire, whereby the respective protection slide (11, 12) is movable to its closed position (SV).

7. Protection device according to claim 6, **characterised in that** the activating unit (25) acts upon at least one pivot axis (19, 20) of the levers (17, 18).

8. Protection device according to claim 6 or 7, **characterised in that** the activating unit (25) is constituted by a spring return actuator.

9. Protection device according to any one of claims 6 to 8, **characterised in that** it is adapted to move the protection slide (11, 12) from the open position (SO) to the closed position (SV) and to return the protection slide (11, 12) from the closed position (SV) to the open position (SO) such that only a small force of the activating unit (25), which is equal to at most 50 Nm, preferably to at most 15 Nm, is required.

10. Protection device according to any one of claims 1 to 9, **characterised in that** the sliding mechanism (15) is essentially formed of stainless steel.

11. Protection device according to any one of claims 1 to 10, **characterised by** a wall element (36) for a modular arrangement on the wall W, the wall element (36) having apertures (37, 38) that correspond to the duct openings (6, 7).

12. Protection device according to any one of claims 1 to 11, **characterised in that** a substantial part of each of the protection slides (11, 12) is made of a highly fire insulating material, preferably of a cement-bonded silicate fire protection panel.

13. Protection device according to any one of claims 1 to 12, **characterised in that** a substantial part of each of the protection slides (11, 12) is made of a radiation-absorbing material, preferably a plumbiferous metal mixture.

14. Protection wall, more particularly for fire protection of air conditioned rooms for information technology installations or for fire and/or radiation protection in nuclear power plants, **characterised by** at least one protection device (10) according to any one of claims 1 to 13.

15. Protection wall according to claim 14, **characterised by** a modular structure comprising a plurality of protection devices (10) according to any one of claims 1 to 13.

## Revendications

1. Dispositif de protection (10) pour conduits de ventilation où au moins une bouche d'air (6, 7) pour l'amenée et/ou l'évacuation d'air est prévue, plus particulièrement pour la protection contre l'incendie de locaux climatisés pour équipements informatiques ou de tunnels ou de constructions de tunnels ou pour la protection contre l'incendie et/ou contre le rayonnement dans des centrales nucléaires, comprenant au moins une vanne de protection (11, 12) montée de manière déplaçable en direction verticale, un mécanisme de coulissement (15) permettant d'amener la vanne de protection (11, 12) d'une position d'ouverture (SO) vers une position de fermeture (SV) de la bouche d'air (6, 7), la bouche d'air (6, 7) étant complètement couverte en position de fermeture (SV) par la vanne de protection (11, 12), et un élément de compensation (11, 12) pour la compensation du poids de la vanne de protection (11, 12), le poids de l'élément de compensation (11, 12) correspondant à une grande partie au moins du poids de la vanne de protection (11, 12), **caractérisé en ce que** le mécanisme de coulissement (15) comprend un arrangement de leviers (16) ou une commande par câble articulé(e) à la vanne de protection (11, 12) et à l'élément de compensation (11, 12) de telle manière que du poids agissant sur l'élément de compensation (11, 12) résulte une force agissant en sens inverse sur la vanne de protection (11, 12), l'élément de compensation (11, 12) et/ou l'arrangement de leviers (16) ou la commande par câble, respectivement, étant réalisé(e) de telle manière qu'entre le poids et la force agissant en sens inverse sur la vanne de protection (11, 12) et sur l'élément de compensation (11, 12), respectivement, résulte substantiellement un équilibre des forces.

2. Dispositif de protection selon la revendication 1, **caractérisé en ce que** l'élément de compensation est constitué d'une autre vanne de protection (11, 12).

3. Dispositif de protection selon la revendication 1 ou 2, **caractérisé en ce que** l'arrangement de leviers (16) comprend au moins un levier (17, 18) ayant un axe de pivotement (19, 20) agencé entre la vanne de protection (11, 12) et l'élément de compensation (11, 12), la vanne de protection (11, 12) présentant un élément de connexion (27, 28) articulé à une extrémité de levier respective et l'élément de compensation (11, 12) un élément de connexion (27, 28) articulé à l'autre extrémité de levier respective.

4. Dispositif de protection selon la revendication 3, **caractérisé en ce que** l'arrangement de leviers (16) comprend deux levers (17, 18) qui s'entrecroisent.

5. Dispositif de protection selon la revendication 4, **caractérisé en ce que** sur l'axe de pivotement (19, 20) de chaque levier (17, 18) est montée une roue dentée (21, 22), lesdites roues dentées (21, 22) s'engrenant réciproquement et coopérant ainsi pendant le mouvement pivotant des leviers (17, 18).

6. Dispositif de protection selon l'une quelconque des revendications 1 à 5, **caractérisé en ce que** le mécanisme de coulissement (15) comprend une unité d'activation (25) agissant sur l'arrangement de leviers (16) et produisant un mouvement pivotant de l'arrangement de leviers (16) en cas d'incendie qui permet d'amener la vanne de protection (11, 12) respective en position de fermeture (SV).

7. Dispositif de protection selon la revendication 6, **caractérisé en ce que** l'unité d'activation (25) agit sur au moins un axe de pivotement (19, 20) des leviers (17, 18).

8. Dispositif de protection selon la revendication 6 ou 7, **caractérisé en ce que** l'unité d'activation (25) est constituée d'un entraînement à rappel par ressort.

9. Dispositif de protection selon l'une quelconque des revendications 6 à 8, **caractérisé en ce qu'**il est agencé de telle manière que pour amener la vanne de protection (11, 12) de la position d'ouverture (SO) vers la position de fermeture (SV) et pour ramener la vanne de protection (11, 12) de la position de fermeture (SV) vers la position d'ouverture (SO) seul un petit effort de l'unité d'activation (25) est nécessaire lequel est égal à 50 Nm au plus, préférablement à 15 Nm au plus.

10. Dispositif de protection selon l'une quelconque des revendications 1 à 9, **caractérisé en ce que** le mécanisme de coulissement (15) est essentiellement constitué d'acier inoxydable.

11. Dispositif de protection selon l'une quelconque des revendications 1 à 10, **caractérisé par** un élément de paroi (36) pour un montage modulaire sur la paroi W, l'élément de paroi (36) présentant des ajours (37, 38) correspondant aux bouches d'air (6, 7).

12. Dispositif de protection selon l'une quelconque des revendications 1 à 11, **caractérisé en ce qu'**une grande partie de la vanne de protection (11, 12) respective est constituée d'un matériau hautement isolant contre le feu, préférablement d'un panneau de protection incendie à base de silicate lié au ciment.

13. Dispositif de protection selon l'une quelconque des revendications 1 à 12, **caractérisé en ce qu'**une grande partie de la vanne de protection (11, 12) respective est constituée d'un matériau absorbant le rayonnement, préférablement d'un mélange de métaux plombifère.

14. Paroi de protection, plus particulièrement pour la protection contre l'incendie de locaux climatisés pour équipements informatiques ou pour la protection contre l'incendie et/ou contre le rayonnement dans des centrales nucléaires, **caractérisée par** au moins un dispositif de protection (10) selon l'une quelconque des revendications 1 à 13.

15. Paroi de protection selon la revendication 14, **caractérisée par** une structure modulaire avec une pluralité de dispositifs de protection (10) selon l'une quelconque des revendications 1 à 13.
